Europäisches Patentamt

European Patent Office

Office européen des brevets

(19)

(11) Veröffentlichungsnummer: **0 057 816 B1**

(12) **EUROPÄISCHE PATENTSCHRIFT**

(45) Veröffentlichungstag der Patentschrift: **13.03.91**

(21) Anmeldenummer: **82100170.8**

(22) Anmeldetag: **12.01.82**

(51) Int. Cl.5: **G01F 1/00, G01F 1/22, A01J 7/00, G01F 1/52, G01F 15/08**

(54) Milchflussmesser.

(30) Priorität: **16.01.81 DE 3101302**

(43) Veröffentlichungstag der Anmeldung:
**18.08.82 Patentblatt 82/33**

(45) Bekanntmachung des Hinweises auf die
Patenterteilung:
**13.03.91 Patentblatt 91/11**

(84) Benannte Vertragsstaaten:
**AT BE CH FR GB LI NL SE**

(56) Entgegenhaltungen:
**DE-A- 2 447 261**
**DE-B- 1 235 607**
**DE-C- 273 693**
**DE-C- 869 701**
**FR-A- 2 229 953**

(73) Patentinhaber: **Hoefelmayr & Co.**
**Steinwichslenstrasse 20**
**CH-9052 Niederteufen(CH)**

(72) Erfinder: **Hoefelmayr, Tilmann, Dr.**
**Steinwichslenstrasse 20**
**CH-9052 Niederteufen AR(CH)**
Erfinder: **Maier, Jakob**
**Schelmengriesstrasse 1**
**W-8939 Türkheim/Allgäu(DE)**

(74) Vertreter: **Patentanwälte Grünecker, Kinkel-**
**dey, Stockmair & Partner**
**Maximilianstrasse 58**
**W-8000 München 22(DE)**

## Beschreibung

Die Erfindung betrifft einen Milchflußmesser zum kontinuierlichen Messen des durch eine Melkmaschine abgemolkenen Milchflusses, mit einer Milchzuführleitung, mit einer Meßkammer, mit einer die Meßkammer durchsetzenden Milchabführleitung, in der ein senkrechter Schlitz zum Ableiten der Milch aus der Meßkammer in die Milchabführleitung ausgebildet ist, und mit einer Einrichtung zur Messung der Stauhöhe der Milch in der Meßkammer.

Für die Automatisierung des maschinellen Melkens und insbesondere für die genaue Steuerung der jeweiligen Melkparameter wie Melkvakuum, Pulsatorvakuum, Pulsatorfrequenz und Saugphasenlänge während des Melkvorganges oder zur Beendigung des gesamten Melkvorganges und eines anschließenden selbständigen Abnehmens des Melkzeuges ist es außerordentlich wichtig, daß jederzeit der genaue Milchfluß gemessen und gegebenenfalls in Abhängigkeit von dem Milchfluß Steuerungen vorgenommen werden können. Ebenso wichtig ist es, jeweils die genaue individuelle Gesamtmilchmenge zu bestimmen, die jeweils von dem gemolkenen Tier (Kuh, Ziege oder Schaf) bei einem Melkvorgang abgegeben wird.

Flußmesser, die nach den verschiedensten physikalischen Prinzipien arbeiten, sind bereits bekannt. Bei der Milchflußmessung ergeben sich jedoch aufgrund des Einsatzortes sowie des vorgegebenen maschinellen Melkverfahrens Besonderheiten, die eine unmittelbare Anwendung der bekannten Flußmesser ausschließt. Ein Milchflußgerät sollte insbesondere die folgenden Forderungen erfüllen:

1. Das Gerät sollte die tägliche Routinearbeit beim Melken nicht behindern. D.h. es sollte möglichst klein, leicht und einfach zu handhaben, insbesondere leicht zu reinigen sein, besonders im Hinblick auf die Anwendung eines solchen Gerätes in einem Anbindestall.

2. Der Milchflußmesser sollte universell verwendbar sein, d.h. es sollte inbesondere sowohl bei hoch- wie auch bei tiefverlegten Melkleitungen unter den verschiedensten Vakuum- und Pulsationsbedinungen funktionsfähig sein.

3. Der Meßfehler, insbesondere für die Messung der täglichen Gesamtmilchmenge, sollte unter 5 % liegen.

4. Ein solches Milchflußmeßgerät sollte so gestaltet sein, daß es bei der täglichen Spülung des Melkzeuges ohne Zerlegen mitgereinigt werden kann.

5. Bei einem Milchflußmesser sollten die Anwenderspezifischen Fehler so gering wie möglich gehalten werden, d.h. ein solches Gerät sollte eine weitgehende Lageunabhängigkeit aufweisen, einen unkomplizierten Aufbau haben und möglichst einfach zu bedienen sein.

Die Messung des Milchflusses muß praktisch an einer Stelle zwischen dem Kuheuter und der Milchsammelleitung, in der Milch von verschiedenen Kühen zusammengeführt wird, ausgeführt werden. Die Messung des Milchflusses ist deshalb verhältnismäßig schwierig, da die zu messende Milch an der Meßstelle in einem in mehrerer Hinsicht unterschiedlichen sowie diskontinuierlichen Zweiphasenstrom vorliegt. So ändern sich die Eigenschaften der Milch, wie zum Beispiel ihre Viskosität, ihre elektrische Leitfähigkeit von Tier zu Tier, selbst bei einem einzelnen Tier bereits innerhalb eines einzelnen Gemelks je nach der Milchzusammensetzung, z.B. dem Gehalt der Milch an Eiweiß, Fett oder Mineralien. So ist es z.B. bekannt, daß der Fettgehalt der Milch gegen Ende des Melkaktes zunimmt, und daß insbesondere das Nachgemelk den höchsten Fettgehalt überhaupt hat.

Weiterhin ändert sich, da zur besseren Abführung der aus der Zitze ermolkenen Milch intermittierend eine etwa gleichbleibende Menge Atmosphärenluft in die Milchabführleitung eingelassen wird, wodurch die Milch praktisch in Form von Milchkolben durch die Leitung transportiert wird, der relative Luftanteil in der Milch in Abhängigkeit von der Höhe des Milchflusses. Ferner ist die Menge der jeweils eingelassenen Atmosphärenluft je nach den verwendeten Melkzeugen unterschiedlich. Der relative Luftanteil ändert sich jedoch auch in Abhängigkeit von einer Verschmutzung oder einer Beschädigung der Eintrittsöffnung für die Atmosphärenluft, wobei der Anteil der ungewollten Leckluft in manchen Fällen ein Vielfaches der gewollten Lufteinlaßmenge sein kann. Weiterhin ist selbst bei einem festen relativen Luftanteil die Mischungsintensität zwischen den Phasen Milch/Luft äußerst unterschiedlich. Diese Mischungsintensität reicht von einem Milchkolben, der praktisch keinen Luftanteil enthält, über eine Mischung in Form von groben, sodann feinen Schaum bis hin zu feinsten Luftbläschen. Eine weitere Schwierigkeit der Milchflußmessung besteht darin, daß der Milchstrom an der Meßstelle mehr oder weniger stark und unregelmäßig pulsiert, was auf die Eigenheit des maschinellen Melkverfahrens zurückzuführen ist. Weitere Schwierigkeiten bei einer Milchflußmessung bestehen darin, daß die Strömungsgeschwindigkeit der Milch an der Meßstelle ein Produkt aus mehreren, variablen Einflußgrößen, wie z.B. der momentanen Vakuumhöhe, der Durchflußmenge, der äußeren und der inneren Reibung der Milch oder etwa der Transporthöhe ist. Schließlich muß die Flußmessung praktisch im Melkvakuum durchgeführt werden, ohne daß dieses gestört werden darf.

Aus der DE-A-2 447 261 ist bereits ein Milchflußmesser der eingangs erwähnten Art bekanntgeworden, bei dem in einer Meßkammer, die einen Staumeßraum bildet, ein den Boden der Meßkammer durchsetzendes Milchabflußrohr vorgesehen ist, das in seinem in die Meßkammer hinein vorstehenden Abschnitt in seiner Seitenwand im Abstand voneinander angeordnete Öffnungen aufweist. Über diese Öffnungen kann die Milch je nach der Stauhöhe der Milch in der Meßkammer in das Milchableitungsrohr abfließen. Die Abflußöffnungen können auch in Form eines oder mehrerer senkrechter Schlitze ausgebildet sein. In der Meßkammer selbst sind Vorrichtungen vorgesehen, um jeweils die sich einstellende Stauhöhe der Milch zu messen. Die Milch wird in die Meßkammer über eine Zuführleitung eingeführt, die senkrecht in die Meßkammer hineinragt.

Aus der DE-OS 28 10 376 und 28 39 101 sind bereits Milchmengenmeßgeräte bekanntgeworden, bei denen die Milch tangential in einen oberen Milchsammelraum eingeführt wird, der über einer Meßkammer angeordnet ist, die an ihrem unteren Ende mit einer Milchabflußleitung verbunden ist. Aus dem Milchsammelraum wird jeweils durch periodisches Öffnen eine Verbindung zwischen dem Milchsammelraum und der Meßkammer und gleichzeitigem Schließen der Milchabführleitung Milch in die Meßkammer eingeführt, die Füllhöhe in der Meßkammer mit Hilfe einer Schwimmeranordnung gemessen und sodann die so festgestelle Milchmenge nach dem Verschließen der Verbindung zwischen dem Milchsammelraum und der Meßkammer und Öffnen der Milchabflußleitung abgeführt. Die Vorrichtung ist verhältnismäßig kompliziert und beansprucht einen verhältnismäßig großen Raum. Bei einer Schräglage des Gerätes besteht die Gefahr eines Verklemmens der beweglichen Teile. Die Meßgenauigkeit des Gerätes hängt sehr stark von der jeweiligen Abweichung des Meßgerätes von seiner senkrechten Ausrichtung ab. Ferner kann die Messung nur in einem bestimmten Zeitabschnitt erfolgen, d.h. eine kontinuierliche Milchflußmessung ist nicht möglich.

An dem Institut für Landtechnik der Technischen Universität München-Weihenstephan ist auch bereits ein Ringelektrodenmilchflußmeßgerät entwickelt und bekanntgeworden, bei dem die Milch durch ein senkrechtstehendes Rohr geleitet wird, das an seinem oberen Ende bauchig zu einem Milchsammelraum erweitert ist, in den die abgemolkene Milch tangential eingeleitet wird. In dem unteren, zylindrischen Teil des Meßrohrs sind im Abstand voneinander zwei Ringelektroden eingebaut, zwischen denen der elektrische Widerstand gemessen wird, der sich durch den Milchstrang einstellt, der sich gerade zwischen den beiden Ringelektroden befindet. Die Messung des Milchflusses aufgrund des elektrischen Leitwertes gestaltet sich jedoch äußerst problematisch. So ändert sich der Leitwert der Milch in Abhängigkeit von dem relativen Luftanteil in der Milch, den jeweiligen Bestandteilen in der Milch, wie Fett, Eiweiß oder anorganischen Bestandteilen, oder auch der jeweiligen Milchtemperatur. Ferner ist die Strömungsgeschwindigkeit in dem Meßrohr abhängig von dem jeweiligen Milchfluß, so daß eine Milchmengenmessung äußerst problematisch ist. Außerdem ist es kaum möglich, im unteren Durchflußbereich (unterhalb 1 l/min) genau zu messen, wenn das Gerät für einen maximalen Durchfluß von ca. 6 l/min ausgelegt ist. 6 l/min ist bei modernen Hochleistungskühen eine Mindestanforderung.

Aus der US-PS 4 122 718 ist auch bereits eine Vorrichtung zur Messung der Füllstandshöhe eines Flüssigkeitsbehälters bekanntgeworden. Zwei in ein Kunststoffmaterial eingegossene Elektroden werden in den Behälter eingetaucht, dessen Flüssigkeitshöhe zu messen ist. Mit Hilfe einer an die Elektroden angelegten Wechselspannung wird die Kapazität zwischen den beiden Elektroden gemessen, die sich in Abhängigkeit von der Füllhöhe des Behälters ändert.

Aus der US-PS 4 173 892 ist auch bereits eine ähnliche Vorrichtung zur Messung der Gesamtmilchmenge, die von einer Kuh in einem Gemelk abgegeben wird, bekanntgeworden. Bei dieser Vorrichtung wird die Milch in ein Sammelgefäß geleitet, auf dessen Innen- oder Außenseite zwei einander gegenüberliegende Elektroden angeordnet sind. In Abhängigkeit von der Füllhöhe des Gefäßes ändert sich die zwischen den beiden Elektroden mi Hilfe von Wechselspannung gemessene Kapazität. Das bekannte Gerät ermöglicht jedoch nur die Messung der Gesamtmilchmenge in einem Gemelk. Die Genauigkeit der Messung selbst wird erheblich durch den auf der Milchoberfläche vorhandenen Milchschaum beeinträchtigt.

Aus der DE-C-273 693 war auch bereits eine Flüssigkeitsmeßvorrichtung bekanntgeworden, bei der ein Flüssigkeitsabführrohr senkrecht durch den Boden eines eine Meßkammer bildenden Zylindergefässes geführt ist und aufrecht in dieses Zylindergefäß vorsteht. In der Längsseitenwand des in das Zylindergefäß hinein vorstehenden Teils des Flüssigkeitsableitungsrohres ist ein senkrechter Meßschlitz zum Ableiten von Flüssigkeit aus der Meßkammer in das Flüssigkeitsableitungsrohr ausgebildet Die Meßkammer ist durch eine zylindrische Trennwand derart räumlich unterteilt, daß der den Meßschlitz aufweisende Teil des Flüssigkeitsableitungsrohres in dem von der Trennwand umfaßten Raum angeordnet ist, der nur über eine am unteren Ende der Trennwand ausgebildete Übertrittsöffnung mit einem Ringraum strömungsmäßig in Verbindung steht, der zwischen der Innenseite der Meßkammer und der Außenseite dieser Trennwand angeordnet ist. Die Flüssigkeit wird über ein senkrecht verlaufendes Rohr zugeführt, das koaxial zu einer unter dem unteren Ende dieses Zuführrohres angeordneten Kegelfläche angeordnet ist. Die auf diese Kegelfläche auftreffende Flüssigkeit wird durch diese derart seitlich abgelenkt, daß die Flüssigkeit in den äußeren Ringraum fällt, der zwischen der Innenseite des zylindrischen Gefäßes und der Außenseite der Trennwand gebildet wird. Die Ablesung der Stauhöhe erfolgt visuell außerhalb des Gefäßes. Bei einer schäumenden Flüssigkeit ist eine solche Ablesung praktisch unmöglich.

Der vorliegenden Erfindung liegt die Aufgabe zugrunde, einen Milchflußmesser anzugeben, der eine möglichst genaue und kontinuierliche Messung des Milchflusses ermöglicht. Diese Aufgabe wird ausgehend von einem Milchflußmesser der eingangs erwähnten Art dadurch gelöst, daß die Milchzuführleitung tangential in einen oberhalb der Meßkammer liegenden Milchsammelraum mündet, dessen Durchmesser sich in einem Bereich unterhalb des tangentialen Einlaufs kontinuierlich nach abwärts bis zu einer Verengungsstelle verringert, die die Durchlaßöffnung zur Meßkammer bildet, die durch eine Trennwand räumlich unterteilt ist, und daß der den Meßschlitz aufweisende Teil der Milchabführleitung und zumindest teilweise die Einrichtung zur Messung der Stauhöhe in dem von der Trennwand umschlossenen Raum angeordnet sind, der nur über eine am unteren Ende der Trennwand ausgebildete Übertrittsöffnung mit dem an die Verengungsstelle anschließenden Teil der Meßkammer strömungsmäßig in Verbindung steht.

Durch die besondere Ausgestaltung des Milchsammelraums wird die Milch, die periodisch und impulsförmig in den Milchsammelbehälter einschießt, aufgrund der besonderen Ausgestaltung der Innenwand dieses Milchsammelbehälters derart geführt, daß die Milch gegen die untere Verengungsstelle des Milchsammelbehälters hin in Rotation gehalten wird und daß sich die Rotationsgeschwindigkeit der Milch bei ihrem Absinken gegen die Verengungsstelle hin erhöht. Aufgrund der dabei auftretenden Zentrifugalkraft findet eine äußerst günstige Trennung des Zweiphasengemisches Luft/Milch in Milch einerseits und Luft andererseits statt. Gleichzeitig wird die Verweilzeit der Milch in dem Milchsammelbehälter derart erhöht, daß die intermittierend ankommenden Milchkolben zu einem zusammenhängenden kontinuierlichen Milchfluß verschmolzen werden. Aufgrund der bei der Rotation auftretenden Zentrifugalwirkung wird dieses Zusammenführen der Milch zu einem kontinuierlichen Milchfluß selbst bei geringsten Durchflußmengen erreicht. Das heißt, es wird bei jedem Durchsatz der Milch die erstrebte Wirkung der Luft/Milchtrennung sowie der Ausbildung eines kontinuierlichen Milchflusses erzielt. Dadurch kann letztlich eine hervorragende Beruhigung in dem Milchsammelraum ohne wesentliche Schaumbildung erreicht werden.

Dadurch, daß in Kombinaiton hiermit die Milch in den die Milchabführleitung enthaltenden Teil der Meßkammer nur über eine untere Übertrittsöffnung in einer Trennwand gelangen kann, wird erreicht, daß die in diesem Teil der Meßkammer befindliche Milch praktisch frei von kinetischer Energie und Milchschaum ist, so daß die über den Meßschlitz abfließende Milchflußmenge allein und genau durch Messung der Stauhöhe bestimmbar ist, die mit Hilfe beispielweise einer Widerstandsmessung oder etwa mit etwa eines Hitzdrahtinstrumentes oder einer Kapazitätsmessung sehr genau bestimmt werden kann, da die Hauptfehlerquellen in Form von Milchschaum und Oberflächenwelligkeit ausgeschlossen sind. Da der Zugang der Milch in den durch die Trennwand abgeschirmten Raum der Meßkammer nur von unten über die Übertrittsöffnung, und falls als Trennwand eine Taucherglocke verwandt wird, nur über einen schmalen Spalt zwischen dem unteren Rand der Taucherglocke und dem Boden der Meßkammer erfolgen kann, wird erreicht, daß die Milch, die sich in dem die Milchabführleitung umfassenden Teil der Meßkammer befindet, praktisch frei von Milchschaum und einer Oberflächenwelligkeit ist. Durch die besondere Anordnung und Ausgestaltung des Milchflußmessers wird also erreicht, daß eine Milch/Lufttrennung stattgefunden hat, bevor die Milch über den Meßschlitz abfließt, so daß nur die tatsächliche Milchmenge gemessen wird. Ferner ist die kinetische Energie der Milch praktisch bereits vollständig aufgezehrt, wenn die Milch in den die Milchabführleitung enthaltenden Teil der Meßkammer gelangt, so daß die Messung in einer praktisch vollständig beruhigten Zone ohne Oberflächenwelligkeit und Milchschaum sowie Luftblasen durchgeführt werden kann. Die Milchflußbestimmung wird daher allein aufgrund der Messung der Stauhöhe ermöglicht.

Die Milchabführleitung kann vorzugsweise ein in die Meßkammer vorstehendes Rohr umfassen, in dem der Meßschlitz ausgebildet ist. Wird in diesern Fall die Trennwand als eine das Rohr umgebende Taucherglocke ausgebildet, so ergibt sich ein verhältnismäßig großes Volumen unter der Taucherglocke, in dem praktisch völlig beruhigte Milch vorliegt. Die Beruhigung wird noch verbessert, wenn der Raum unter der Taucherglocke nur über eine Übertrittsöffnung zugängig ist, die auf der dem Meßschlitz abgewandten Seite liegt.

Um das an dem Melkbecher anliegende Melkvakuum möglichst wenig durch das Milchflußmeßgerät zu beeinflussen, wird die Ausbildung vorzugsweise derart getroffen, daß das Rohr bis in den Milchsammelraum vorsteht und an seinem oberen Ende eine Luftbypassöffnung aufweist. Hierdurch wird zwischen dem Milchsammelraum und der Milchabführleitung ein Bypass gebildet, über den gleichzeitig die von der Milch abgetrennte Luft um die Meßstrecke herumgeführt werden kann.

Die Messung der Stäubhöhe läßt sich etwa durch Bestimmung des Widerstandes eines Hitzdrahtes bestimmen, der in einem geringen Abstand vor und parallel zu dem Meßschlitz angeordnet ist. Aufgrund der wesentlich besseren Wärmeableitung wie auch der verhältnismäßig hohen elektrischen Leitfähigkeit der Milch im Verhältnis zu den entsprechenden Eigenschaften der Luft ändert sich in einem sehr genau meßbaren Rahmen der Widerstand des Meßdrahtes in Abhängigkeit von der Stauhöhe. Zur Verbesserung der Messung kann in die Messung eine kontinuierliche Bestimmung der Temperatur der Milch sowie der Luft miteinbezogen werden.

Bevorzugt wird die Stauhöhe jedoch mit Hilfe von wenigstens zwei in der Meßkammer angeordneten Elektroden kapazitiv bestimmt. Eine besonders von der Neigung des Flußmeßgerätes gegen die Senkrechte unabhängige Messung der Flußmenge wird dann erreicht, wenn eine der Elektroden auf dem Boden der Meßkammer angeordnet wird, so daß sie praktisch in jeder in der Praxis tatsächlich vorkommenden Neigungslage des Flußmeßgerätes im Betrieb von Milch bedeckt ist, während die andere Elektrode in Form einer vor und in geringem Abstand parallel zu dem Meßschlitz verlaufenden Elektrodenstabes ausgebildet ist.

Die Elektroden selbst sind zweckmäßigerweise mit einem hydrophoben und fettabstoßenden Kunststoff, vorzugsweise einen Polytetrafluoräthylen oder Paraffin überzogen. Auf diese Weise wird eine über die eigentliche Stauhöhe hinausgehende Benetzung der Elektroden mit Flüssigkeit verhindert, die zu einer vorgetäuschten vergrößerten Elektrodenfläche und damit zu einer tatsächlich nicht vorliegenden vergrößerten Stauhöhe führen würde. Dies ist insbesondere auch im Hinblick auf eine gegebenenfalls innerhalb der Trennwand noch vorhandene leichte Oberflächenwelligkeit der Milch von Bedeutung, da bei einer schnellen Änderung der Stauhöhe somit unmittelbar nur eine der tatsächlichen Stauhöhe entsprechende Elektrodenfläche benetzt wird.

Es kann zweckmäßig sein, die Innenwand des unteren Teils des Milchsammelraums und/oder des oberen Teils der Meßkammer rotationssymmetrisch auszubilden. Als besonders günstig hat sich hierbei die Ausgestaltung in Form einer Paraboloidfläche erwiesen.

Die nach dem Passieren der Verengungsstelle zwischen Milchsammelraum und Meßkammer noch vorhandene Rotationsbewegung der Milch wird dadurch praktisch vollständig abgebaut, daß der obere Teil der Innenwand der Meßkammer sich nach abwärts erweitert. Ein Abbau der Rotation der Milch beim Übergang von dem Milchsammelraum in die Meßkammer oder vom oberen in den unteren Teil des Milchsammelraums sollte auf keinen Fall mit Hilfe von quer zur Strömungsrichtung der Milch stehenden Hindernissen erfolgen. Denn bei der an diesen Hindernissen entstehenden Verwirbelung würde eine erneute Schaumbil dung erfolgen. Ferner würde eine solche Maßnahme zu einer zusätzlichen, ganz erheblichen mechanischen Belastung der Milch mit den Risiken einer Ausbutterung, mehr freier Fettsäuren und eventuellen Reinigungsproblemen führen.

Im folgenden soll die Erfindung näher anhand von in der Zeichnung dargestellten Ausführungsbeispielen erläutert werden. In der Zeichnung zeigen:

Fig. 1    einen Längsschnitt durch einen gemäß der Erfindung ausgebildeten Milchflußmesser,

Fig. 2    eine Schnittansicht entlang der Linie II-II in Figur 1,

Fig. 3    ein schematisches Schaltbildung der Schaltung der Kapazitäten der Elektroden,

Fig. 4    eine Schnittansicht durch eine weitere Ausführungsform eines erfindungsgemäßen Milchflußmessers,

Fig. 5    eine Schnittansicht entlang der Linie V-V in Figur 4,

Fig. 6    die Form des Meßschlitzes von vorne gesehen,

Der Milchflußmesser 1 weist ein im wesentlichen zylindrisches Gehäuse 2 auf, mit einer Milchzuführleitung 3, die tangential in einen Milchsammelraum 4 mündet. Der Milchsammelraum weist an seinem unteren Ende eine Vereingungsstelle 5 auf, die eine Durchlaßöffnung 6 begrenzt, die den Milchsammelraum 4 mit der unter diesem angeordneten Meßkammer 2 verbindet. In das Gehäuse 2 steht von unten her ein einen Teil einer Milchabführleitung bildendes Rohr 8 vor, das koaxial zu dem Gehäuse 2 angeordnet ist und sich durch die Meßkammer und im wesentlichen auch durch den Milchsammelraum 4 erstreckt und dessen oberes offenes Ende 9 kurz unterhalb des oberen Deckels 10 des Gehäuses 2 mündet. Das untere Ende 11 des Rohres 8 ist mit der übrigens nicht weiter dargestellten Milchabführleitung verbunden.

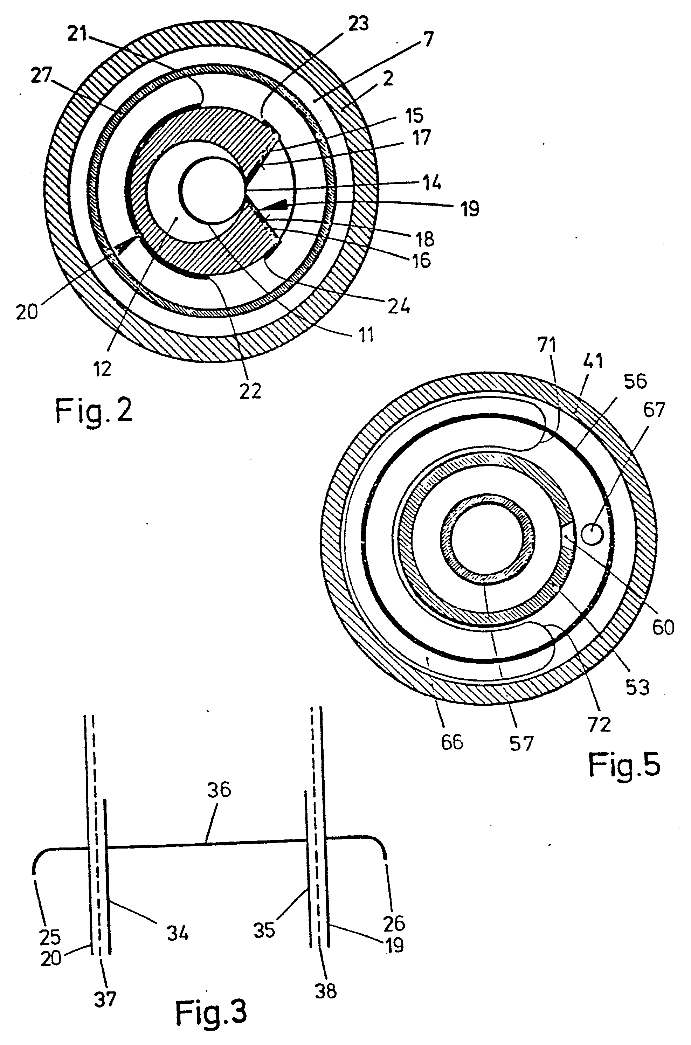

In dem sich im wesentlichen durch die Meßkammer 7 erstreckenden Teil ist das Rohr 8 zu einem Rohrteil 12 mit größerem Querschnitt als das Rohr 8 verbreitert. In der Außenwand des Rohrteils 12 erstreckt sich parallel zur Längsachse dieses Rohrteiles ein bis zum Boden 13 der Meßkammer 7 reichender Meßschlitz 14. Wie am besten aus Figur 2 zu ersehen ist, ist die den Meßschlitz 14 bildende Wand nach auswärts gegen die Meßkammer 7 hin v-förmig sich erweiternd ausgespart. Hierdurch werden zu beiden Seiten des Schlitzes 14 Flächen 15 und 16 gebildet, auf denen Metallschichten aufgebracht bzw. Metallfolien 17,18 aufgeklebt sind, die zusammen eine Meßelektrode bilden, die insgesamt mit 19 bezeichnet ist. Auf der dem Meßschlitz 14 abgewandten Seite des Rohrteils 12 ist weiter eine Masseelektrode 20 aufgebracht. Diese Masseelektrode 20 erstreckt sich vorzugsweise ebenfalls in einer dem Meßschlitz 14 entsprechenden Länge über die Längsseite des Rohrteils 12 bis ebenfalls zum Boden 13 der Meßkammer 7. Die Längskanten 21 und 22 der Masseelektrode liegen in einem solchen Abstand von den Längskanten 23 und 24 der Maßelektrode 19, daß nach Möglichkeit das Fließen eines elektrischen Stromes zwischen diesen Kanten über die Oberfläche des Rohrteils 12 ausgeschlossen ist. Die Meßelektrode 19 sowie die Masseelektrode 20 sind mit einer dünnen Kunststoffschicht überzogen. Der Kunststoff muß so beschaffen sein, daß er milch- und fettabweisend ist, so daß ein Hochklettern der Milch an dieser Kunststoffschicht einerseits ausgeschlossen ist und der Verbleib von Fett und Milchrückständen durch direktes Abperlen vermieden wird. Der Kunststoff und die Dicke des Kunststoffes müssen so beschaffen sein, daß sie gasundurchlässig sind, so daß eine elektrolytische Zersetzung der Milch und der Elektroden (Lochfraß) vermieden wird. Als besonders günstig hat sich als Kunststoffmaterial Polytetrafluoräthylen oder Paraffin erwiesen.

Die Meßelektrode 19 sowie die Masseelektrode 20 sind jeweils mit isolierend durch das Gehäuse 2 nach außen geführten Anschlüssen 25 und 26 verbunden.

Im Abstand unterhalb der Durchlaßöffnung 6 ist an dem Rohr 8 eine dieses koaxial umgebende und bis nahezu zu dem Boden 13 der Meßkammer 7 herabreichende Trennwand 27, die in Form einer Taucherglocke ausgebildet ist, angeordnet. Die Außenfläche der Taucherglocke ist vorzugsweise in Form einer um die Längsachse des Rohres 8 gedrehte Parabel, d.h. in Form einer Paraboloidfläche ausgestaltet. In dem gezeigten Ausführungsbeispiel weist der untere Rand der Taucherglocke einen gleichmäßigen Abstand von dem Boden auf. Vorzugsweise wird dieser Abstand jedoch ungleichmäßig derart gewählt, daß dieser Abstand unmittelbar vor dem Meßschlitz wesentlich kleiner als auf der dem Meßschlitz abgewandten Seite ist. Der Abstand sollte jedoch so groß sein, daß eine automatische Reinigung nach dem Durchspülverfahren gewährleistet wird.

Der untere Rand der Taucherglocke kann auch (was jedoch nicht dargestellt ist) bis unter das untere Ende des Meßschlitzes herabgezogen werden, wenn der Boden des Meßgefäßes entsprechend abgesenkt wird. Dies führt zu einer besonders günstigen Beruhigung der Milch vor dem Meßschlitz. Andererseits bedarf es in diesem Fall erst einer Ansammlung einer kleinen Milchmenge auf dem Boden des Gefäßes bevor Milch über den Meßschlitz abzufließen beginnt.

Die Innenwand des Milchsammelraumes 4 ist in ihrem unteren Teil in Form einer nach abwärts und einwärts geneigten, um die Längsachse 29 des Gehäuses 2 als Rotationsachse angeordnete Paraboloidfläche 30 ausgebildet. Diese geht nach abwärts in die Durchlaßöffnung 6 über, die ihrerseits nach abwärts in den oberen, rotationssymmetrischen Teil 31 der Innenwand der Meßkammer 7 übergeht. Dieser Teil 31 der Innenwand der Meßkammer ist vorzugsweise ebenfalls in Form einer sich nach abwärts erweiternden um die Längsmittelachse 29 des Gehäuses 2 als Rotationsachse angeordneten Paraboloidfläche ausgebildet. Der untere Teil 30 der Innenfläche des Milchsammelraumes 4 und der obere Teil 31 der Innenfläche der Meßkammer 7 bilden zusammen die Verengungsstelle 5, an deren engster Stelle der Milchsammelraum 4 über die Durchlaßöffnung 6 mit der Meßkammer 7 direkt verbunden ist.

Die Funktionsweise des oben beschriebenen Milchflußmessers ist wie folgt: Der Milchflußmesser kann an einer beliebigen Stelle zwischen etwa einem Melkbecher und dem Sammelstück, sofern lediglich der Milchfluß von einer Zitze gemessen werden soll, oder zwischen dem Sammelstück und einer Milchsammelleitung oder einem Milchsammelbehälter in der Milchabführleitung eingefügt werden. Dementsprechend wird der Milchzuführleitung 3 Milch im Rythmus des Pulsatortaktes intermittierend zugeführt. Da die Milchzuführleitung 3 tangential in den Milchsammelraum 4 mündet, wobei die Milchzuführleitung einen Winkel zwischen 0 und 25° und vorzugsweise zwischen 10 und 20° mit der Horizontalen einschließen kann, rotiert die Milch entlang der Innenwand des Milchsammelraumes 4. Hierbei wird aufgrund der wirkenden Zentrifugal- und Zentripedalkräfte bereits weitgehend eine Trennung zwischen der Milch und der mitgeführten Luft stattfinden. Aufgrund der Fläche 30 wird die Verweilzeit der Milch in dem Milchsammelraum 4 vergrößert, so daß insbesondere auch bei geringen Milchflüssen bereits praktisch eine Trennung von Luft und Milch in diesem Raum stattfinden kann. Weiterhin wird durch die Vergrößerung der Verweilzeit erreicht, daß wenigstens 2 und vorzugsweise mehrere aufeinanderfolgende Milchimpulse noch in dem Milchsammelraum aufeinandertreffen, wodurch der Milchfluß wesentlich gleichmäßiger wird. Aufgrund der Verengungsstelle 5 nimmt die Rotation der Milch abwärts bis zur Durchquerung der Durchlaßöffnung 6 zu. Aufgrund der sich nach abwärts jedoch stetig erweiternden Innenwand 31 der Meßkammer 7 wird die Rotation der Milch praktisch so weit herabgesetzt, daß die Milch praktisch ihre gesamte kinetische Energie verloren hat, wenn sie den Boden 13 der Meßkammer erreicht. Die Milch tritt sodann zwischen dem unteren Rand 32 der Taucherglocke 27 und dem Boden in den Raum unter der Taucherglocke ein und steigt entsprechend der jeweiligen Flußmenge unter der Taucherglocke bis zu einer bestimmen Stauhöhe an. Die Milch fließt sodann über den bei dem vorliegenden Beispiel über seine ganze Länge eine gleichmäßig Breite aufweisenden Meßschlitz 14 ab und gelangt in den erweiterten Rohrteil 12 des Rohres 8. Von hier wird die Milch sodann durch das Melkvakuum über das untere Ende 11 des Rohres 8 abgesogen. Zum Druckausgliech und zum gesonderten Lufttransport zwischen dem Milchsammelraum 4 und der Milchabführleitung und um das Melkvakuum möglichst unverändert an der Milchzuführleitung 3 wirksam werden zu lassen, ist das obere Ende 9 des Rohres 9 offen.

Die Bestimmung der Milchflußmenge erfolgt durch Messung der Stauhöhe der Milch an dem Meßschlitz 14. Diese Messung erfolgt kapazititv mit Hilfe der beiden Elektroden 19 und 20.

In Figur 3 ist schematisch die Schaltung der Meßelektrode 19 mit ihrem Anschluß 26 sowie der Masseelektrode 20 mit ihrem elektrischen Anschluß 25 dargestellt. Auf beiden Elektroden 19 und 20 ist jeweils eine dünne Kunststoffschicht 37 bzw. 38 aufgebracht. Die den Elektroden 19 bzw. 20 abgewandten Seite der Kunststoffschicht 37 bzw. 38 wird durch das Meßmedium, in diesem Falle die Milch, bis zur Höhe der Stauhöhe also auf einer Fläche der Höhe 34 bzw. einer Fläche 35 mit gleicher Höhe benetzt. Diese beiden Flächen 34 und 35 werden durch das zu messende Medium (Milch) 36, das einen sehr hohen Leitwert von 45 bis 75 μs/m hat, elektrisch verbunden, so daß die Flächen 34 und 35 praktisch durch das Medium 36 als elektrisch kurzgeschlossen anzusehen sind. Die Schaltung stellt sich also dar als zwei hintereinander geschaltete Kondensatoren, bei denen jeweils das Dielektrizitätsmedium durch die Kunststoffschicht 37 bzw. 38 auf den Elektroden 20 bzw. 19 gebildet wird. Die Dicke der Kunststoffschichten 37 und 38 bestimmt somit praktisch auch die Dicke der Kondensatoren, weshalb die Größe der Dicke der Kunststoffschichten sehr stark in den Meßfehler eingeht. Die Kunststoffschichten sollten deshalb jeweils eine äußerst gleichmäßige Dicke aufweisen. Die Änderung der Kapazität Δ C dieser Gesamtanordnung ist direkt proportional der Änderung der Summe der benetzten Flächen 34 und 35. (Milchschaum und eine über die Füllstandshöhe hinausgehende Benetzung der Elektroden wirken wie eine Erhöhung der Stauhöhe). Die Änderung dieser Flächen ist ihrerseits wieder direkt proportional zu der Änderung Δ h der Stauhöhe. Mithin läßt sich die Änderung der Stauhöhe unmittelbar mit Hilfe der Kapazitätsänderung der genannten Schaltung messen.

Für die Messung der Kapazitätsänderung können beliebige bekannte Schaltungen verwandt werden. Eine bevorzugte Schaltung ist z.B. in der DE-AS 1 121 824 beschrieben, wobei die Schaltungsanordnung derart getroffen wird, daß eine Wechselspannung an einen Spannungsteiler aus einem Meßwiderstand und der zu messenden Kapazität gelegt wird und die an dem Meßwiderstand abfallende Wechselspannung gleichgerichtet und gemessen wird.

Eine Schaltung kann beispielsweise darin bestehen, daß ein Oszillator mit einem Dreiecksspannungsausgang zur Erzeugung der benötigten Wechselspannung vorgesehen wird. An dem Meßwiderstand fällt sodann eine durch die Meßstrecke, d.h. die durch die Elektroden 19 und 20 gebildeten Kondensatoren, bedingte Rechteckspannung ab. In einem nachfolgenden Breitband Operationsverstärker wird die Meßspannung um den Faktor 100 verstärkt, mit einem aktiven Gleichrichter mit hoher Linearität gleichgerichtet, und mit einem RC-Glied geglättet. Über einen Impedanzwandler wird das Signal sodann auf einen Filter, der zusätzlich als Meßwert-Detektor ausgebildet ist, um Wellen und Blasen an den Meßelektroden zu kompensieren, gegeben. Der Meßwert-Detektor überbrückt die Zeit, die vergeht bis überschießende, die Elektroden benetzende Flüssigkeit an den Elektroden abperlt. Die elektrischen Spitzensignale, die sich aufgrund einer schnell ändernden Stauhöhenänderung aufgrund der noch verbleibenden Oberflächenrestwelligkeit ergeben, werden durch den Meßwert-Detektor unterproportional und beispielsweise nur etwa zu einem Drittel bewertet. Das Milchflußsignal wird sodann auf einen Operationsverstärker zur Nacheichung mit einem Verstärkungsfaktor von 1 bis 1,5 gegeben.

Sollen nicht nur der Milchfluß sondern auch die gesamte Milchmenge bestimmt werden, so wird das Milchflußsignal digitalisiert und anschließend addiert, so daß die Gesamtmilchmenge unmittelbar angegeben werden kann.

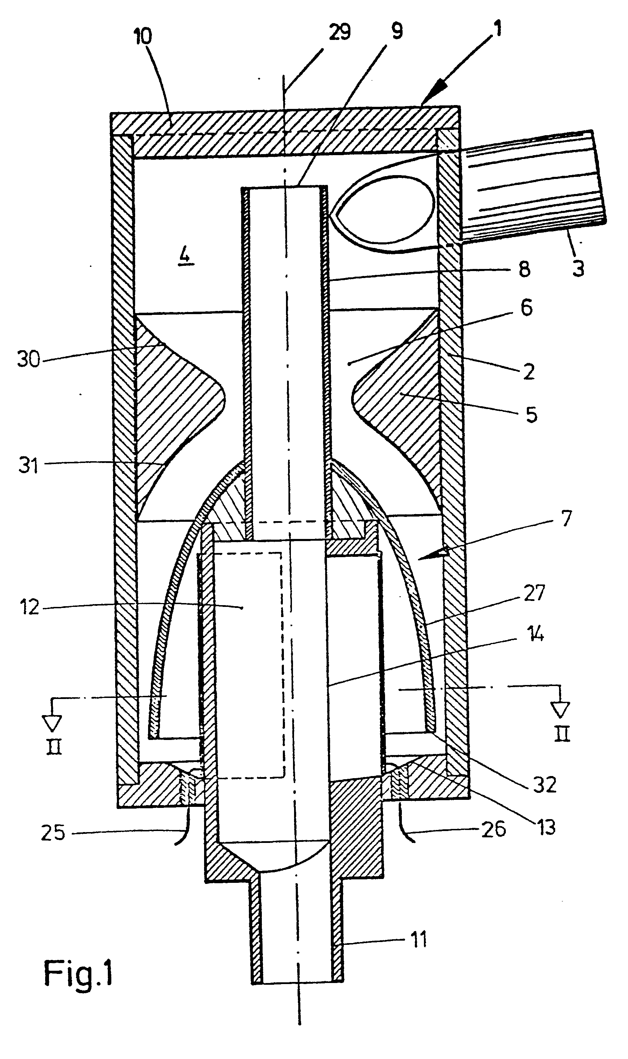

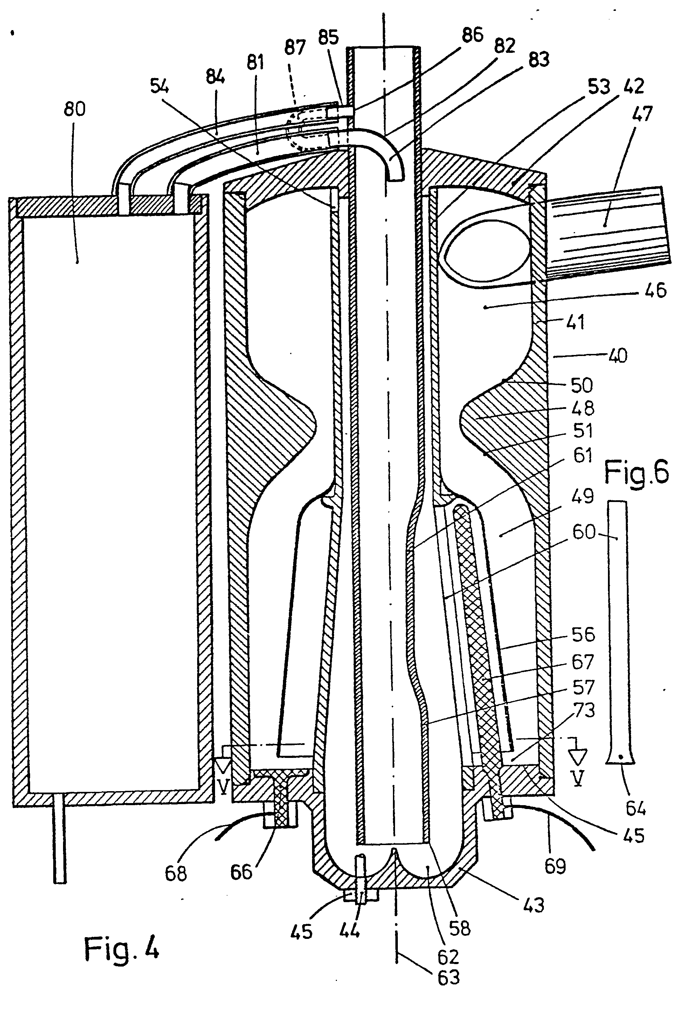

Die Figuren 4 bis 6 zeigen einen dem in Figur 1 dargestellten Flußmesser ähnlichen Flußmesser, weshalb im wesentlichen nur auf die abweichenden Merkmale besonders eingegangen werden soll. Der Flußmesser 40 weist ebenfalls ein zylindrisches Gehäuse 41 auf, das an seinen Enden mit Deckeln 42 und 43 verschlossen ist, die durch 3 parallel zur Längsachse des Gehäuses verlaufende Stangen zusammengehalten werden, von denen lediglich die Stange 44 mit einer Mutter 45 angedeutet ist.

In dem Milchsammelraum 46 mündet tangential die Milchzuführleitung 47. Der Milchsammelraum 46 ist durch die Verengungsstelle 48 mit der Meßkammer 49 verbunden. Die Verengungsstelle 48 wird gleichfalls durch den unteren Teil der Innenwand 50 des Milchsammelraumes, die nach abwärts und einwärts geneigt ist, und den oberen Teil der Innenwand 51 der Maßkammer gebildet, die nach abwärts und auswärts geneigt ist. Ein Rohr 53, das an seinem oberen Ende über eine Öffnung 54 mit dem Milchsammelraum 46 in Verbindung steht, erstreckt sich über den gesamten Milchsammelraum und die Meßkammer und ein gewisses Stück über den unteren Boden 45 der Meßkammer hinaus. Der Querschnitt des Rohres 53 vergrößert sich beginnend von der Stelle, an dem die Taucherglocke 56 befestigt ist bis zu seinem unteren Ende. Koaxial zu und im Inneren des Rohres 53 ist ein Milchableitungsrohr 57 geführt. Das untere Ende 58 dieses Milchableitungsrohres 57 reicht bis unter den in der Seitenwand und in Längsrichtung des Rohres 53 ausgebildeten Meßschlitz 60. Um in Höhe des Meßschlitzes 60 eine ungehinderte Aufnahme der durch den Meßschlitz 60 tretenden Milch in das Rohr 53 zu ermöglichen, ist das Milchableitungsrohr 57 an der Stelle 61 in Höhe des Meßschlitzes gegen diesen so weit zurückgesetzt, daß ein ungehinderter Übergang der Milch in das Rohr 53 erfolgen kann.

Um einen möglichst strömungstechnisch günstigen Übergang von dem Rohr 53 an dessen unteren Ende in das Milchableitungsrohr 57 zu ermöglichen und um eine einwandfreie Reinigung des Milchflußmessers mit Hilfe eines einfachen Durchleitens von Reinigungsflüssigkeit zu ermöglichen, ist die Innenwand 62 des Deckels 43 in Form einer Rotationsfläche ausgebildet, die etwa dadurch gebildet ist, daß die untere Hälfte eines Kreisbogens, an die Mittellängsachse 63 des Milchableitungsrohes 57 eine Tangente bildet, um diese Mittellängsachse 63 rotieren gelassen wird. Das untere Ende des abgeschlossenen Rohres 53 soll so klein ausgebildet sein, daß stehenbleibende Flüssigkeitsreste nach Gebrauch durch einen kurzen Lufteinlaß bei angelegtem Melkvakuum entleert werden.

Die Form des Schlitzes 60 ist besser aus der Figur 6 zu ersehen. Um eine günstige und einfache Zuordnung zwischen Flußmenge und Stauhöhe zu erreichen, ist der Schlitz insgesamt etwa in Form eines parallel zur Längsachse des Rohres 53 verlaufender Längsschlitz ausgebildet. Der Meßschlitz weist jedoch eine sich von dem untern Ende gegen das obere Ende hin leicht verjüngende Gestalt auf, wobei die Verjüngung z.B. so beschaffen sein kann, daß der insgesamt etwa 65 mm lange Schlitz an seinem unteren Ende eine Breite von etwa 4,5 mm und an seinem oberen Ende eine Breite von etwa 4,2 mm aufweist. Darüberhinaus hat es sich als günstig erwiesen, den Schlitz an seinem Fuß noch darüberhinaus in einer Höhe von 5 mm derart zu verbreitern, daß er auf seiner Grundseite 64 eine Breite von 6 mm aufweist.

Wie aus den Figuren 4 und 5 zu ersehen ist, ist die Messeelektrode 66 als eine in den Bogen 45 der Meßkammer eingelegte etwa C-förmige Elektrode ausgebildet. Dies hat den Vorteil, daß die Masseelektrode im Betrieb des Flußmessers praktisch immer mit Milch bedeckt ist, so daß sich in dem in Figur 3 gezeigten Schaltbild die Änderung ergibt, daß praktisch die Fläche 35 immer konstant ist, und nicht von der Stauhöhe abhängt. Damit ergibt sich in den in Figur 3 gezeigten Schaltbild die Änderung, daß sich zwischen den Flächen 19 und 35 keine Kapazitätsänderungen ergeben, so daß dieser Teil der Reihenschaltung praktisch als konstant anzusehen ist.

Die Meßelektrode 67 ist bei diesem Ausführungsbeispiel als ein parallel zu dem Schlitz 60 verlaufender und in einem geringen Abstand vor diesem angeordneter Elektrodenstab ausgebildet. Der Elektrodenstab liegt vollständig unterhalb der Taucherglocke 56 und steht durch den Boden 45 der Meßkammer in diese hinein vor. Die Masseelektrode 66 sowie die Meßelektrode 67 sind jeweils mit nach außen aus dem Gehäuse herausgeführten Anschlüssen 68 und 69 verbunden.

Sowohl die Masseelektrode 66 wie auch die Meßelektrode 67 sind jeweils mit einer dünnen Schicht eines wasser- sowie fettabweisenden Kunststoffs überzogen. Da bei dieser Schaltungsanordnung praktisch die gesamte Kapazitätsänderung in Abhängigkeit von der Stauhöhe nur in dem Maß eintritt, in dem die Fläche der Meßelektrode 67 von der Milch mehr oder weniger benetzt wird, ist in diesem Falle lediglich die Schichtdicke des Kunststoffüberzuges auf der Meßelektrode 67 kritisch und Abweichungen von der Schichtdicke gehen in diesem Falle verstärkt in den Meßfehler ein. Dagegen ist die Schichtdicke des Kunststoffüberzuges auf der Masseelektrode 66 in diesem Fall nicht kritisch und die Schichtdicke auf der Masseelektrode kann ebenfalls von der Schichtdicke des Kunststoffüberzugs der Meßelektrode 67 abweichen. Geringe Schichtdickenabweichungen können auch bei der Meßelektrode hingenommen werden, wenn lediglich die Bedingungen erfüllt ist, daß die über den Stabumfang integrierte Schichtdicke in jeder axialen Höhe der Meßelektrode möglichst wenig schwankt.

Weiterhin hat es sich als zweckmäßig erwiesen, die Fläche der Masseelektrode so zu bemessen, daß diese größer als die Fläche der Meßelektrode und vorzugsweise wenigstens 2 bis 2,5 mal größer als die Fläche ist.

Die Meßelektrode 67 soll möglichst nah vor dem Schlitz 60 angeordnet sein, jedoch soll der Abstand so groß sein, daß der Durchfluß durch den Schlitz 60 hierdurch nicht behindert wird. Eine solche Anordnung der Meßelektrode hat sich als besonders zweckmäßig in Hinblick darauf erwiesen, daß dadurch der Milchflußmesser und die gemessene Milchflußmenge unabhängig von einer Schräglage des Milchflußmessers in den Grenzen wird, wie sie im praktischen Betrieb zu erwarten sind.

Aus meßtechnischen Gründen wird vorzugsweise auch (s. Figur 5) der Abstand zwischen den Enden 74 und 72 der Masseelektrode 66 von der Meßelektrode 67 derart gewählt, daß die Entfernung wenigstens 15 mm beträgt. Diese Angaben beziehen sich etwa auf einen Milchflußmesser, bei dem das Gehäuses 41 einen Durchmesser von 80 mm hat. Um einen ungehinderten Milchfluß von der Meßkammer 49 über den unteren Rand der Taucherglocke 56 unter die Taucherglocke und in den Meßschlitz 60 zu ermöglichen und damit sich jeweils unmittelbar die jeweilige Stauhöhe entsprechend der in der Meßkammer 49 vorhandenen Milch ausbilden kann, wird die Fläche 73, die sich zwischen dem unteren Rand der Taucherglocke 56 und dem Boden 45 der Meßkammer aufspannt, so gewählt, daß diese Fläche etwa zweimal so groß wie die Gesamtfläche des Schlitzes 60 ist.

Eine Besonderheit des vorliegenden Milchmessers besteht darin, daß eine zusätzliche Möglichkeit geschaffen ist, während des Melkens Proben aus dem Milchfluß zu entnehmen. Dies ist deshalb besonders interessant, da sich die Milchzusammensetzung während des Melkens ändert. Insbesondere nimmt gewöhnlich der Fettgehalt der Milch gegen Ende des Melkvorganges zu. Zur Entnahme von Proben ist ein Probenbehälter 80 vorgesehen, der über eine erste Leitung 81 mit einem Rohrkrümmerstück 82 verbunden ist, dessen freies offenes Ende 83 in Form eines Rohres zur Messung des Staudruckes in den Milchfluß in dem Milchableitungsrohr 57 vorsteht. Der Probenbehälter 80 ist weiterhin über eine zweite Leitung 84 mit einen Anschlußstutzen 85 in dem Milchableitungsrohr 57 verbunden. Der Anschlußstutzen 85 steht über eine Öffnung 86 mit dem Inneren des Milchableitungsrohres 57 in Verbindung. Die Entnahme von Milch sollte zweckmäßig in einer senkrecht aufsteigenden Strömung erfolgen. In diesem Falle liegt über dem Querschnitt des Milchableitungsrohres eine gleichmäßigere Verteilung des Milch-Luft-Gemisches vor, so daß sich bei einer Probenentnahme eine repräsentativere Zusammensetzung der Probe ergibt. Die Öffnung 86 liegt vorzugsweise strömungsunterhalb und radial versetzt gegenüber der Stelle, an der das Rohrkrümmerstück 82 in die Milchabführleitung 57 eingeführt ist. Das offene Ende 83 des Rohrkrümmerstückes 82 ist vorzugsweise exzentrisch in bezug auf die Längsachse des Milchableitungsrohres 57 angeordnet.

Aufgrund des Staudruckes sowie des an der Öffnung 86 herrschenden Melkvakuums lassen sich die Proben leicht in den Behälter 80 überführen. Da die Entnahme von Proben nur in größeren Zeitabständen erfolgt, kann während der übrigen Zeit das aus dem Rohr 57 vorstehende Ende des Rohrkrümmerstücks 82 über einen Schlauch 87 mit dem Anschlußstutzen 85 verbunden werden, so daß sich eine schnelle Umrüstung von einer Probenentnahme auf normalen Betrieb erreichen läßt.

Die Wirkungsweise des in den Figuren 4 bis 6 dargestellten Milchflußmessers ist praktisch genauso wie bei dem vorbeschriebenen Ausführungsbeispiel. Bei dieser Anordnung wird lediglich die Milch im Gegensatz zu der ersten Anordnung nach aufwärts durch das Milchableitungsrohr 57 und nicht nach abwärts abgeleitet. Die Messung der Kapazitätsänderung in Abhängigkeit von der Stauhöhe und gegebenenfalls die Messung der Gesamtmilchmenge erfolgt in derselben Weise wie bei dem vorstehend beschriebenen Ausführungsbeispiel.

Die Erfindung schafft einen völlig neuen Milchflußmesser, der aufgrund seines geringen Gewichtes und seiner geringen Größe bei der täglichen Routinearbeit beim Melken nicht stört. Das Gerät ist aufgrund seines Aufbaues universell einsetzbar, d.h. sowohl bei hoch- wie auch bei tiefverlegten Melkleitungen und unter den verschiedensten Vakuum- und Pulsationsbedingungen funktionsfähig. Es können leicht Meßgenauigkeiten erreicht werden, bei denen der Meßfehler lediglich zwei bis drei Prozent beträgt. Die Meßgenauigkeit wird durch die in der Praxis vorkommenden Lageabweichungen des Gerätes von seiner normalen senkrechten Lage praktisch nicht beeinflußt. Die Reinigung des Gerätes bildet kein Problem. Vielmehr kann das Gerät mit der für das übrige Melkzeug üblichen Durchflußspülung gereinigt werden.

## Ansprüche

1. Milchflußmesser zum kontinuierlichen Messen des durch eine Melkmaschine abgemolkenen Milchflusses, mit einer Milchzuführleitung (3; 47), mit einer Meßkammer (7; 49), mit einer die Meßkammer durchsetzenden Milchabführleitung (8, 11, 12; 53,57), in der ein senkrechter Meßschlitz (14; 60) zum Ableiten der Milch aus der Meßkammer (7; 49) in die Milchabführleitung ausgebildet ist, und mit einer Einrichtung (19, 20;66, 67) zur Messung der Stauhöhe der Milch in der Meßkammer, **dadurch gekennzeichnet,** daß die Milchzuführleitung (3; 47) tangential in einen oberhalb der Meßkammer (7; 49) liegenden Milchsammelraum (4; 46) mündet, dessen Durchmesser sich in einem Bereich unterhalb des tangentialen Einlaufs kontinuierlich nach abwärts bis zu einer Verengungsstelle (5; 48) verringert, die die Durchlaßöffnung der Meßkammer bildet, die durch eine Trennwand (27; 56) räumlich unterteilt ist, und daß der den Meßschlitz (14; 60) aufweisende Teil der Milchabführleitung (8; 53) und zumindest teilweise die Einrichtung zur Messung der Stauhöhe in dem von der Trennwand umschlossenen Raum angeordnet sind, der nur über eine am unteren Ende der Trennwand ausgebildete Übertrittsöffnung (73) mit dem an die Verengungsstelle (5; 48) anschließenden Teil der Meßkammer strömungsmäßig in Verbindung steht.

2. Milchflußmesser nach Anspruch 1, **dadurch gekennzeichnet,** daß die Milchabführleitung (8; 53) ein in die Meßkammer vorstehendes Rohr (8, 12; 53) umfaßt, in dem der Meßschlitz (14, 60) ausgebildet ist.

3. Milchflußmesser nach Anspruch 2, **dadurch gekennzeichnet,** daß das Rohr (8, 12; 53) bis in den Milchsammelraum (4, 46) vorsteht und an seinem oberen Ende eine Luftbypassöffnung (9, 54) aufweist.

4. Milchflußmesser nach einem der Ansprüche 1 bis 3, **dadurch gekennzeichnet,** daß die Einrichtung zur Messung der Stauhöhe aus einer elektrischen Meßvorrichtung besteht.

5. Milchflußmesser nach Anspruch 4, **dadurch gekennzeichnet,** daß die Vorrichtung zur Messung der Stauhöhe einen Hitzdraht umfaßt, der im Abstand vor dem und parallel zur Längsachse des Meßschlitzes (14, 60) angeordnet ist.

6. Milchflußmesser nach Anspruch 4, **dadurch gekennzeichnet,** daß die Vorrichtung zur Messung der Stauhöhe Elektroden (19, 20; 66, 67) umfaßt, mit denen die Stauhöhe kapazitiv meßbar ist.

7. Milchflußmesser nach Anspruch 6, **dadurch gekennzeichnet,** daß eine erste (20) und vorzugsweise während des Meßvorgangs vollständig mit Flüssigkeit bedeckte Elektrode (66) und eine zweite, sich wenigstens über die Länge des Meßschlitzes erstreckende Elektrode (19, 67) vorgesehen sind.

8. Milchflußmesser nach Anspruch 7, **dadurch gekennzeichnet,** daß die zweite Elektrode (19) als ein sich entlang einer Seite und vorzugsweise entlang beider Seiten des Meßschlitzes (14) erstreckender Streifen (17, 18) ausgebildet ist.

9. Milchflußmesser nach Anspruch 7, **dadurch gekennzeichnet,** daß die zweite Elektrode (67) als ein im Abstand vor und parallel zu dem Meßschlitz (60) verlaufender Stab ausgebildet ist.

10. Milchflußmesser nach einem der Ansprüche 6 bis 9, **dadurch gekennzeichnet,** daß die Oberflächen der Elektroden (19, 20; 66, 67) mit einem dünnen, feuchtigkeitsabweisenden Kunststoff überzogen sind.

11. Milchflußmesser nach Anspruch 10, **dadurch gekennzeichnet,** daß der Kunststoff Polytetrafluoräthylen oder Paraffin ist.

12. Milchflußmesser nach einem der Ansprüche 10 oder 11, **dadurch gekennzeichnet,** daß die Schicht des Kunststoffüberzugs (37, 38) für jede Elektrode (19, 20; 66, 67) gleichmäßig dünn ist.

13. Milchflußmesser nach einem der Ansprüche 7 bis 12, **dadurch gekennzeichnet,** daß die erste Elektrode (66) auf dem Boden (45) der Meßkammer angeordnet ist.

14. Milchflußmesser nach einem der Ansprüche 7 oder 13, **dadurch gekennzeichnet,** daß die für die Kapazitätsmessung wirksamen Flächen der ersten (20, 66) und der zweiten Elektrode (19, 67) so gewählt sind, daß die Fläche der ersten Elektrode größer als die der zweiten Elektrode ist.

15. Milchflußmesser nach Anspruch 14, **dadurch gekennzeichnet,** daß das Verhältnis der Flächen der ersten (20; 66) und der zweiten (19; 67) Elektrode wenigstens 2 : 1 und vorzugsweise 2,5 : 1 ist.

16. Milchflußmesser nach einem der Ansprüche 1 bis 15, **dadurch gekennzeichnet,** daß die Vorrichtung zur Messung der Stauhöhe einen die durch die gegebenenfalls vorhandene Oberflächenwelligkeit der Milch hervorgerufenen kurzzeitigen Meßsignalspitzen unterproportional bewertenden Meßwert-Detektor enthält.

17. Milchflußmesser nach einem der Ansprüche 1 bis 16, **dadurch gekennzeichnet,** daß die Trennwand durch eine Taucherglocke (27, 56) gebildet wird, und daß die Übertrittsöffnung durch die zwischen dem unteren Rand (32) der Taucherglocke (27, 56) und dem Boden (13; 45) der Meßkammer (7, 49) aufgespannte Fläche gebildet wird.

18. Milchflußmesser nach einem der Ansprüche 1 bis 17, **dadurch gekennzeichnet, daß die** Fläche der Übertrittsöffnung (73) etwa 2mal so groß wie die Fläche des Meßschlitzes (14, 60) ist.

19. Milchflußmesser nach einem der Ansprüche 1 bis 18, **dadurch gekennzeichnet, daß die** Innenwand des unteren Teils des Milchsammelraums (4, 46) in Form einer Paraboloidfläche ausgebildet ist.

20. Milchflußmesser nach einem der Ansprüche 1 bis 19, **dadurch gekennzeichnet, daß die** Innenwand des oberen Teils der Meßkammer (7; 49) rotationssymmetrisch ist und sich ausgehend von der Verengungsstelle (5; 48) nach abwärts erweitert.

21. Milchflußmesser nach Anspruch 20, **dadurch gekennzeichnet, daß die Innenwand des obe-**ren Teils der Meßkammer (7; 49) in Form einer Paraboloidfläche ausgebildet ist.

22. Milchflußmesser nach einem der Ansprüche 1 bis 21, **dadurch gekennzeichnet, daß die** Außenfläche der Trennwand (27, 56) in Form einer Paraboloidfläche ausgebildet ist.

23. Milchflußmesser nach Anspruch 22, **dadurch gekennzeichnet, daß die** Rotationsachse der Außenfläche der Trennwand (27, 56) koaxial zu der Längsachse (29, 63) der Verengungsstelle (5; 48) angeordnet ist.

24. Milchflußmesser nach einem der Ansprüche 1 bis 23, **dadurch gekennzeichnet, daß die** tangential in den Milchsammelraum (4, 46) mündende Milchzuführleitung (3, 47) unter einem Winkel von etwa 10 bis 20° gegen die Horizontale geneigt ist.

**Claims**

1. Milk flow meter for continuous measurement of the milk flow milked by a milking machine, with a milk feed line (3; 47), with a measuring chamber (7 , 49), with a milk discharge line (8, 11, 12; 53, 57) passing through the measuring chamber, in which line a vertical measuring slit (14, 60) is formed for diverting the milk out of the measuring chamber (7; 49) into the milk discharge line, and with a device (19, 20; 66, 67) for measuring the surface level of the milk in the measuring chamber, characterised in that the milk feed line (3; 47) opens tangentially into a milk collection chamber (4, 46) which lies above the measuring chamber (7; 49), and whose diameter in a region below the tangential inlet decreases constantly downwards to a constriction point (5; 48) forming the admission aperture of the measuring chamber, which aperture is spatially divided by a partition (27, 56), and in that the part of the milk discharge line (8, 53) having the measuring slit (14; 60) and at least part of the device for measuring the surface level are disposed in the space enclosed by the partition, which space is connected as regards flow to the part of the measuring chamber abutting the constriction point (5; 48) only by means of an overflow aperture (73) formed at the lower end of the partition.

2. Milk flow meter according to Claim 1, characterised in that the milk discharge line (8, 53) comprises a pipe (8, 12, 53) projecting into the measuring chamber, and in which the measuring slit (14; 60) is formed.

3. Milk flow meter according to Claim 2, characterised in that the pipe (8, 12; 53) projects into the milk collection chamber (4, 46) and has an air bypass aperture (9, 54) at its upper end.

4. Milk flow meter according to one of Claims 1 to 3, characterised in that the device for measuring the surface level comprises an electrical measuring device.

5. Milk flow meter according to Claim 4, characterised in that the device for measuring the surface level comprises a hot wire which is disposed at a distance in front of and parallel to the longitudinal axis of the measuring slit (14, 60).

6. Milk flow meter according to Claim 4, characterised in that the device for measuring the surface level comprises electrodes (19, 20; 66, 67) with which the surface level can be measured capacitively.

7. Milk flow meter according to Claim 6, characterised in that a first (20) electrode (66), preferably covered completely with liquid during the measuring operation, and a second electrode (19, 67) extending at least over the length of the measuring slit are provided.

8. Milk flow meter according to Claim 7, characterised in that the second electrode (19) is in the form of a strip (17, 18) extending along one side, and preferably along both sides of the measuring slit (14).

9. Milk flow meter according to Claim 7, characterised in that the second electrode (67) is in the form of a bar running at a distance in front of and parallel to the measuring slit (60).

10. Milk flow meter according to one of Claims 6 to 9, characterised in that the surfaces of the electrodes (19, 20, 66, 67) are coated with a thin, moisture-repellent plastic.

11. Milk flow meter according to Claim 10, characterised in that the plastic is polytetrafluoroethylene or paraffin.

12. Milk flow meter according to one of Claims 10 or 11, characterised in that the layer of the plastic coating (37, 38) is equally thin for each electrode (19, 20; 66, 67).

13. Milk flow meter according to one of Claims 7 to 12, characterised in that the first electrode (66) is disposed on the bottom (45) of the measuring chamber.

14. Milk flow meter according to one of Claims 7 or 13, characterised in that the active surfaces of the first (20, 66) and the second electcode (19, 67) for the capacity measurement are selected in such a way that the surface of the first electrode is larger than that of the second electrode.

15. Milk flow meter acoording to Claim 14, characterised in that the ratio of the surfaces of the first (20; 66) and the second (l9; 67) eleotrode is at least 2 : 1, and preferably 2.5 : 1.

16. Milk flow meter according to one of Claims 1 to 15, characterised in that the device for measuring the surface level contains a measured value detector evaluating underproportionally the brief measuring signal peaks produced by the surface ripple of the milk which may be present.

17. Milk flow meter according to one of Claims 1 to 16, characterised in that the partition is formed by a diving bell (27, 56), and in that the overflow aperture is formed by the surface clamped between the lower edge (32) of the diving bell (27, 56) and the bottom (13; 45) of the measuring chamber (7, 49).

18. Milk flow meter according to one of Claims 1 to 17, characterised in that the surface of the overflow aperture (73) is about twice the size of the surface of the measuring slit (14, 60).

19. Milk flow meter according to one of Claims 1 to 18, characterised in that the inside wall of the lower part of the milk collection chamber (4, 46) is in the form of a paraboloid surface.

20. Milk flow meter according to one of Claims 1 to 19, characterised in that the inside wall of the upper part of the measuring chamber (7; 49) is rotationally symmetrical and widens out downwards starting from the constriction point (5; 48).

21. Milk flow meter according to Claim 20, characterised in that the inside wall of the upper part of the measuring chamber (7; 49) is in the form of a paraboloid surface.

22. Milk flow meter according to one of Claims 1 to 21, characterised in that the external surface of the partition (27, 56) is in the form of a paraboloid surface.

23. Milk flow meter according to Claim 22, characterised in that the axis of rotation of the external surface of the partition (27, 56) is disposed coaxially with the longitudinal axis (29, 63) of the constriction point (5; 48).

24. Milk flow meter according to one of Claims 1 to 23, characterised in that the milk feed line (3, 47) opening tangentially into the milk collection chamber (4, 46) is inclined at an angle of about 10 to 20° to the horizontal.

## Revendications

1. Débitmètre à lait, pour la mesure en continu du débit de lait produit par une trayeuse, avec une conduite d'amenée de lait (3;47), avec une chambre de mesure (7:49), avec une conduite d'évacuation de lait (8,11,12;53,57) traversant la chambre de mesure, dans laquelle une fente de mesure verticale (14; 60) est réalisée dan la conduite d'évacuation du lait pour l'évacuation du lait provenant de la chambre de mesure (7:49), et avec un dispositif (19,20;66, 67) pour la mesure du niveau de déversement dans la chambre de mesure, caractérisé en ce que la conduite d'amenée de lait (3:47) débouche tangentiellement dans une enceinte collectrice de lait (4;46), située au-dessus de la chambre de mesure (7; 49) , dont, dans une zone située au-dessous de l'introduction tangentielle, le diamètre rétrécit de façon continue en descendant jusqu'à un point d'étranglement (5;48) qui forme l'ouverture de passage de la chambre de mesure, qui est subdivisée spatialement par une paroi de séparation (27;56), et en ce que la partie de la conduite d'évacuation de lait (8:53) qui présente la fente de mesure (14:60) et au moins partiellement le dispositif de mesure du niveau de déversement sont disposés dans l'enceinte entourée par la paroi de séparation, qui est reliée hydrauliquement à la partie de la chambre de mesure adjacente au point d'étranglement (5:48), seulement par l'intermédiaire d'une ouverture de contournement (73) réalisée à l'extrémité inférieure de la paroi de séparation.

2. Débitmètre à lait selon la revendication 1, caractérisé en ce que la conduite d'évacuation de lait (8;53) comprend un tube (8,12;53) faisant saillie dans la chambre de mesure, dans lequel est réalisée la fente de mesure (14,60).

3. Débitmètre à lait selon la revendication 2, caractérisé en ce que le tube (8,12;53) fait saillie jusque dans l'enceinte collectrice de lait (4,46) et présente à son extrémité supérieure un orifice de dérivation d'air (9,54).

4. Débitmètre à lait selon l'une des revendications 1 à 3, caractérisé en ce que le dispositif de mesure du niveau de déversement se compose d'un dispositif de mesure électrique.

5. Débitmètre à lait selon la revendication 4, caractérisé en ce que le dispositif de mesure du niveau de déversement comprend un fil chauffé qui est disposé à distance devant la fente de mesure (14,60) et parallèlement à son axe longitudinal.

6. Débitmètre à lait selon la revendication 4, caractérisé en ce que le dispositif de mesure du niveau de déversement comprend des électrodes (19,20:66,67) à l'aide desquelles on peut effectuer une mesure capacitive du niveau de déversement.

7. Débitmètre à lait selon la revendication 6, caractérisé en ce que sont prévues une première électrode (20) et de préférence une électrode (66) complètement mouillée par le liquide pendant le processus de mesure et une deuxième électrode (19,67) qui s'étend au moins sur toute la longueur de la fente de mesure.

8. Débitmètre à lait selon la revendication 7, caractérisé en ce que la deuxième électrode (19) est réalisée sous la forme d'une bande (17,18) s'étendant le long d'une face et de préférence le long des deux faces de la fente de mesure (14).

9. Débitmètre à lait selon la revendication 7, caractérisé en ce que la deuxième électrode (67) est réalisée sous la forme d'une barre (17,18) s'étendant à distance devant la fente de mesure (60) parallèlement à celle-ci.

10. Débitmètre à lait selon l'une des revendications 6 à 9, caractérisé en ce que les surfaces des électrodes (19,20:66,67) sont recouvertes d'une matière plastique mince, isolant de l'humidité.

11. Débitmètre à lait selon la revendication 10, caractérisé en ce que la matière plastique est du polytétrfluoréthylène ou de la paraffine.

12. Débitmètre à lait selon l'une des revendications 10 ou 11, caractérisé en ce que la couche du revêtement de matière plastique (37,38) est mince et d'épaisseur régulière pour chaque électrode (19,20;66,67).

13. Débitmètre à lait selon l'une des revendications 7 à 12, caractérisé en ce que la première électrcde (66) est disposée sur le fond (45) de la chambre de mesure.

14. Débitmètre à lait selon l'une des revendications 7 ou 13, caractérisé en ce que les surfaces, actives pour la mesure de capacité, de la première (20,66) et de la deuxième électrode (19,67) sont choisies telles que la surface de la première électrode est supérieure à celle de la deuxième électrode.

15. Débitmètre à lait selon la revendication 14, caractérisé en ce que le rapport entre les surfaces de la première électrode (20;66) et de la deuxième électrode (19;67) est au moins de 2:1 et de préférence de 2,5:1.

16. Débitmètre à lait selon l'une des revendications 1 à 15, caractérisé en ce que le dispositif de mesure du niveau de déversement contient un détecteur de valeur mesurée donnant une valeur sous-proportionnée des pointes brèves du signal de mesure provoquées par les ondulations se manifestant éventuellement de la surface du lait.

17. Débitmètre à lait selon l'une des revendications 1 a 16, caractérisé en ce que la paroi de séparation est formée par une cloche de flotteur (27,56) et que l'orifice de contournement est formé par la surface délimitée entre le bord inférieur (32) de la cloche de plongeur (27,56) et le fond (13;45) de la chambre de mesure (7,49).

18. Débitmètre a lait selon l'une des revendications 1 à 17, caractérisé en ce que la surface de l'orifice de contournement (73) est à peu près deux fois aussi grande que la surface de la fente de mesure (14,60).

19. Débitmètre à lait selon l'une des revendications 1 a 18, caractérisé en ce que la paroi intérieure de la partie inférieure de l'enceinte collectrice de lait (4,46) est réalisée sous la forme d'une surface paraboloïdale.

20. Débitmètre à lait selon l'une des revendicàtions 1 à 19, caractérisé en ce que la paroi intérieure de la partie supérieure de la chambre de mesure (7;49) est symétrique en rotation et s'élargit vers le bas en partant du point d'étranglement (5;48).

21. Débitmètre à lait selon la revendication 20, caractérisé en ce que la paroi intérieure de la partie supérieure de la chambre de mesure (7;49) est réalisée sous la forme d'une surface paraboloïdale.

22. Débitmètre à lait selon l'une des revendications 1 à 21, caractérisé en ce que la surface extérieure de la paroi de séparation (27, 56) a la forme d'une surface de paraboloïde.

23. Débitmètre à lait d'après la revendication 22, caractérisé en ce que l'axe de rotation de la surface extérieur de la paroi de séparation est disposé de façon coaxiale à l'axe longitudinal (29, 63) du point d'étranglement (5, 48).

24. Débitmètre à lait selon l'une des revendications 1 à 23, caractérisé en ce que la conduite d'amenée du lait (3, 47) qui débouche tangentiellement dans l'enceinte collectrice du lait (4, 46) est inclinée d'un angle de 10° à 20° sur l'horizontale.

Fig.1

Fig. 2

Fig.5

Fig.3

Fig. 4

Fig. 6